## Europäisches Patentamt
## European Patent Office
## Office européen des brevets

(19)

(11) Publication number: **0 068 574**
**B1**

(12) **EUROPEAN PATENT SPECIFICATION**

(45) Date of publication of patent specification: **28.08.85**

(51) Int. Cl.⁴: **C 05 C 1/02**

(21) Application number: **82200766.2**

(22) Date of filing: **19.06.82**

(54) Process for preparing ammoniumnitrate-containing granules of high bulk density.

(30) Priority: **19.06.81 NL 8102957**

(43) Date of publication of application:
**05.01.83 Bulletin 83/01**

(45) Publication of the grant of the patent:
**28.08.85 Bulletin 85/35**

(84) Designated Contracting States:
**AT BE DE FR GB IT NL SE**

(56) References cited:
**DE-B-1 061 342**
**DE-B-1 164 436**
**FR-A-1 292 812**
**FR-A-2 006 042**
**FR-A-2 451 351**
**GB-A- 990 487**
**GB-A-1 136 019**
**US-A-2 005 997**
**US-A-3 317 276**

The file contains technical information
submitted after the application was filed and
not included in this specification

(73) Proprietor: **UNIE VAN KUNSTMESTFABRIEKEN B.V.**
**Maliebaan 81**
**NL-3581 CG Utrecht (NL)**

(72) Inventor: **Mutsers, Stanislaus Martinus Petrus**
**Eindstraat 9**
**NL-6166 EH Geleen (NL)**
Inventor: **Hoek, Cornelis**
**R. v. Gelrestraat 38**
**NL-6118 AD Nieuwstadt (NL)**
Inventor: **Wagemans, Gerardus Mathias Cornelis**
**Dopheide 8**
**NL-6081 CC Haelen (NL)**

(74) Representative: **Roeffen, Wilhelmus Johannes Maria et al**
**OCTROOIBUREAU DSM Postbus 9**
**NL-6160 MA Geleen (NL)**

Courier Press, Leamington Spa, England.

## Description

The invention relates to a process for preparing ammoniumnitrate-containing granules of high bulk density, on the basis of a liquid composition containing calcium nitrate and ammonium nitrate.

A process of this kind is described in, for example, British Patent Specification No. 1,136,019, according to which process a substantially water-free ammoniumnitrate melt containing magnesiumnitrate and/or calciumnitrate is granulated by prilling.

A disadvantage of this process is that a prilling process imposes rather narrow limits on the product granule size. For preparing granules with a diameter of, say, more than 3 mm, for example, a very high prilling tower or extremely forced cooling of the falling drops is required. Since there is a growing demand for larger-diameter granules (especially for use in so-called bulk blends) and since there is a need for processes which are highly flexible with respect to product granule size, say up to 6 mm, a prilling method is not very attractive. Another disadvantage of the abovementioned process is that, in order to obtain granules of high bulk density, a substantially water-free melt has to be used.

A process by which a product of larger granule diameter can be obtained is known from US Patent Specification No. 4.316.736. According to this process an ammoniumnitrate-containing solution, which includes at most 20% wt., in particular 5—10% wt., water and 0.5—3% wt. magnesiumnitrate, is sprayed onto a fluidized bed of ammoniumnitrate seed particles having a temperature of between 120 and 135°C, after which the granules discharged from the bed are cooled at such a slow rate that they remain virtually homogeneous in temperature in the range between 70 and 50°C.

A disadvantage of this known process is that the finished product has a rather high water content (about 0.3% wt.). When stored, granules with such a high water content show increased caking tendency and poorer hygroscopic behaviour, which in general makes it necessary to apply rather a large quantity of coating agent to them. In addition, such a product can hardly be stored or shipped in bulk, and closed bags should be used instead. Another disadvantage of this process is that in the 70→50°C range the granules need to be cooled slowly, which means that for a given quantity of product a relatively big cooling unit is required. In addition, application of this cooling method implies the necessity of using more than one cooling stage, in general three discrete stages (one for cooling down to 70°C, one for the 70→50°C range, one for the range below 50°C). Finally, this process has the disadvantage that its flexibility, for example in terms of the quantity of recycle material, and hence of production capacity, is limited by the narrow temperature range mandatory for the bed of seed particles.

According to another known process (see British Patent Specification No. 990,478) an ammoniumnitrate solution or melt, which may or may not contain calciumnitrate, magnesiumnitrate or aluminiumnitrate, is granulated by the so-called cold spherodizer process. In dependence on the water content of the ammoniumnitrate feed, this results in a more or less porous product. For instance, if the product is made from a 99.8% melt, at a bed temperature of 108°C, its bulk density will be about 910 g/l and if it is made from a 95% solution, at a bed temperature of 106°C, its bulk density will be about 835 g/l. A disadvantage of this known process is that the bulk density of the product is rather low, especially if an ammoniumnitrate solution is started from.

The invention provides a process which rules out the abovementioned disadvantages completely or almost completely, and which yields a granular product combining a very high bulk density (>950 g/l) with an extremely low water content (<0.1% wt., in particular <0.05% wt.).

According to the invention, this is achieved in that an ammoniumnitrate-containing liquid composition, including at most 5% wt. water and 0.03—3.5% wt. calciumnitrate, calculated relative to the quantity of ammoniumnitrate, and having a temperature at least 5°C above its crystallization point, is sprayed into a fluidized bed of ammoniumnitrate-containing seed particles having a temperature of between 95 and 135°C, with the aid of a current of air having a temperature about equal to or slightly lower than that of the liquid composition, at such a rate that the air to liquid composition mass ratio amounts to 1:1 to 1:4, and the granules formed are discharged from the bed.

According to the invention a liquid ammoniumnitrate-containing composition is used which may include up to 5% wt. water. If a feed with a low water content, for example lower than 1% wt., is used, the bed temperature applied preferably is between 100 and 110°C. An advantage of this mode of realization is that the fluidization gas need hardly be pre-heated, if at all.

The amount of calciumnitrate in the liquid composition is preferably 0.5—1% wt., calculated relative to the quantity of ammoniumnitrate. The calciumnitrate can be added as such to an ammoniumnitrate-containing melt or solution, but it is also possible to add calcium oxide, or a calcium salt reacting in situ while forming calciumnitrate, to the nitric acid started from or to the ammoniumnitrate resulting after ammoniation and, possibly, evaporation.

The composition should have a temperature at least 5°C higher than its crystallization temperature and generally lower than its boiling temperature at atmospheric pressure. For safety reasons, temperatures over 180°C are avoided.

The spraying of the composition is effected in known manner, for example in a two-phase spray. By preference, the composition is sprayed from the bottom upward into the bed. The gas is passed through the bed of seeds from bottom to top, in general at a superficial velocity about twice the minimum fluidization velocity. By 'minimum fluidization velocity' is meant the minimum velocity which is sufficient to

2

support the weight of the seeds in the bed (in the case of $NH_4NO_3$ with a mean particle size of 3 mm, it is about 1.2 m/sec).

The temperature of the fluidization gas (air) may vary, for example between 20 and 170°C. In general, such a temperature is applied that, in combination with the temperature of the seeds, the desired bed temperature is achieved.

The seeds are preferably the oversize and undersize fractions resulting after screening of the granules discharged from the bed, the oversize fraction being first crushed. If desired, part of the product fraction can also be returned after having been crushed. The amount of material returned may vary, and is preferably such that the weight ratio of material returned to liquid composition fed in is 1:1 to 1:2. The diameter of the seeds introduced into the bed is preferably between 0.75 and 2.0 mm. The height of the bed is in general 0.5 to 1.0 m.

If a high bed temperature is desired, the fluidization gas can be preheated, and the material returned will not in general be cooled. The fluidization gas can be preheated by heat exchange with the product granules after screening. In order to achieve a low temperature, cold fluidization gas can be used and/or the material returned can be cooled.

It is possible to screen the granules discharged from the bed at once, and next cool the product fraction, but it is also possible to cool first and screen next, and cool the product fraction further if desired. Since fast cooling of the granules has proved to result in a product of increased bulk density, it is preferred to use a fast cooling procedure, in particular fluid-bed cooling. The advantage of this is that cooling equipment of relatively small size is sufficient for the purpose. In the fluid bed cooler(s), by preference conditioned air of ambient or slightly higher temperature is used, while further it is possible to make advantageous use of the heated air issuing from the cooler, as fluidization air for the bed of particles.

The air issuing from the fluidized bed can be purified of dust particles in a known manner, for instance by washing with water or with a dilute, ammoniumnitrate-containing solution.

The product granules resulting after screening and cooling can be further processed in a known manner; they can, for example, be provided with a coating agent. Drying is not necessary for the product obtained by the present process. It may be of importance, though, to subject the granules to a regular rolling motion in a rotary drum, optionally before cooling, to effect a further increase in bulk density.

Although the present process is of special importance for the preparation of ammoniumnitrate granules, it can also be used for the preparation of granules which, besides ammoniumnitrate and calciumnitrate, contain other components, such as fillers (marlstone or dolomite), trace elements, agrochemicals (herbicides etc.) and fertilizer salts. It is particularly advantageous to incorporate a thermal stabilizer for ammoniumnitrate in the liquid composition to be sprayed, for example a finely divided, insoluble, inert material containing silica.

The invention will be elucidated in the following examples.

Example 1

To a circular fluid-bed granulator (diameter 45 cm) provided with a perforated bottom and containing a bed of $NH_4NO_3$ seed particles (mean diameter 3.05 mm; height of the bed 40 cm), a liquid $NH_4NO_3$ composition was continuously supplied with the aid of a strong current of air, via a two-phase sprayer, and sprayed laterally into the bed.

The composition contained 0.31% wt. calciumnitrate, calculated as calcium oxide relative to the quantity of ammoniumnitrate.

The bed (temp. 128°C) was fluidized with the aid of an upward current of air supplied through the bottom plate.

Via an overflow, granules were continuously discharged to a screen, where they were separated into a fine fraction (<2 mm), a production fraction (2—4 mm) and a coarse fraction (>4 mm). The latter fraction was crushed on crusher rollers, and continuously returned to the bed together with the fine fraction.

The product fraction was quickly cooled to about 35°C in a fluid-bed cooler. Part of this product was five times heated and cooled between 15 and 50°C. The process conditions used and the properties of the product obtained and of the product after 5 cycles are summarized in the table below.

Examples 2 through 10

In the same manner as in Example 1, liquid $NH_4NO_3$ compositions containing calciumnitrate were granulated in a fluidized bed of $NH_4NO_3$ seed particles.

In Examples 4, 5 and 6, an amount of finely divided calciumcarbonate had been added to the $NH_4NO_3$ melt.

The results are, again, summarized in the table below.

| Example | 1 | 2 | 3 | 4 | 5 | 6 | 7 | 8 | 9 | 10 |
|---|---|---|---|---|---|---|---|---|---|---|
| Process conditions | | | | | | | | | | |
| bed temp., °C | 128 | 128 | 135 | 105 | 125 | 115 | 110 | 130 | 105 | 120 |
| $H_2O$ content of $NH_4NO_3$ % wt. | 4.90 | 4.90 | 4.90 | 0.53 | 0.53 | 0.82 | 0.75 | 0.75 | 0.58 | 0.58 |
| temp. of $NH_4NO_3$, °C | 147 | 147 | 147 | 171 | 168 | 171 | 171 | 173 | 171 | 169 |
| quantity of $NH_4NO_3$, kg/h | 97 | 97 | 97 | 94 | 94 | 94 | 92 | 92 | 92 | 92 |
| temp. of spraying air, °C | 160 | 160 | 160 | 159 | 153 | 158 | 161 | 161 | 159 | 158 |
| quantity of spraying air, kg/h | 83 | 65 | 83 | 78 | 47 | 76 | 75 | 75 | 81 | 81 |
| temp. of fluidization air, °C | 143 | 148 | 148 | 104 | 145 | 117 | 121 | 152 | 100 | 123 |
| quantity of fluidization air, kg/h | 1180 | 1180 | 1180 | 1180 | 1180 | 1180 | 1180 | 1180 | 1180 | 1180 |
| velocity of fluidization air, m/sec | 2.59 | 2.59 | 2.63 | 2.44 | 2.57 | 2.51 | 2.49 | 2.60 | 2.44 | 2.53 |
| quantity of $Ca(NO_3)_2$, % wt. CaO | 0.31 | 0.34 | 0.38 | — | — | — | 0.29 | 0.28 | 0.34 | 0.35 |
| quantity of $CaCO_3$ | — | — | — | 2 | 2 | 2 | — | — | — | — |

| Example | 1 | 2 | 3 | 4 | 5 | 6 | 7 | 8 | 9 | 10 |
|---|---|---|---|---|---|---|---|---|---|---|
| Product quality | | | | | | | | | | |
| nitrogen content, % wt. | 34.20 | 34.45 | 34.65 | 33.80 | 33.85 | 34.40 | 34.50 | 34.40 | 34.25 | 34.45 |
| $H_2O$ content, % wt. | 0.04 | 0.05 | 0.04 | 0.06 | 0.09 | 0.08 | 0.08 | 0.03 | 0.07 | 0.05 |
| bulk density, g/l | 960 | 920 | 935 | 955 | 955 | 970 | 945 | 990 | 945 | 980 |
| rolling capacity, % round | 95 | 95 | 95 | 28 | 25 | 70 | 80 | 50 | 75 | 65 |
| impact resistance, % | 100 | 100 | 100 | 100 | 100 | 100 | 100 | 100 | 100 | 100 |
| crushing strength, bar | 35 | 35 | 35 | 46 | 35 | 60 | 40 | 45 | 40 | 45 |
| oil-absorption capacity, % wt. | 0.50 | 0.40 | 0.40 | 0.25 | 0.70 | 0.20 | 0.30 | 0.45 | 0.20 | 0.35 |
| $D_{50}$, mm | 3.05 | 2.55 | 2.80 | 2.65 | 1.90 | 2.85 | 2.20 | 2.45 | 3.10 | 2.15 |
| mercury penetration, $cm^3/g$ | 0.030 | 0.039 | 0.032 | 0.045 | 0.049 | 0.026 | 0.039 | 0.032 | — | — |
| Product after 5 cycles | | | | | | | | | | |
| crushing strength, bar | 10 | 10 | 10 | 10 | 5 | 15 | 15 | 20 | 20 | 20 |
| oil-absorption capacity, % wt. | 4.90 | 5.20 | 6.00 | 4.10 | 7.0 | 4.40 | 7.50 | 4.60 | 4.10 | 6.10 |
| volume increase, % | 25 | 25 | 25 | 25 | 25 | 26 | 33 | 21 | 30 | 26 |

**Claims**

1. Process for preparing ammonium nitrate-containing granules of high bulk density, on the basis of a liquid composition containing calcium nitrate and ammonium nitrate, this process being characterized in that an ammoniumnitrate-containing liquid composition, including at most 5% wt. water and 0.3—3.5% wt. calcium nitrate, calculated relative to the quantity of ammonium nitrate, and having a temperature at least 5°C above its crystallization point, is sprayed into a fluidized bed of ammoniumnitrate-containing seed particles having a temperature of between 95 and 135°C, with the aid of a current of air having a temperature about equal to or slightly lower than that of the liquid composition, at such a rate that the air-to-liquid composition mass ratio amounts to 1:1 to 1:4, and the granules formed are discharged from the bed.

2. Process according to claim 1, characterized in that an ammonium nitrate-containing melt with at most 1% wt. water is sprayed into a bed of seed particles having a temperature of between 100 and 110°C.

3. Process according to claim 1 or 2, characterized in that an ammonium nitrate-containing liquid composition is used which includes 0.5—1.0% wt. calcium nitrate, calculated relative to the quantity of ammonium nitrate.

4. Process according to any one of the claims 1—3, characterized in that the fluidization gas used is air, flowing through the bed from bottom to top at a superficial velocity about twice the minimum fluidization velocity.

5. Process according to any one of the claims 1—4, characterized in that the granules discharged from the bed are rapidly cooled, at once or after screening, by means of one or more fluid-bed coolers.

6. Process according to claim 5, characterized in that at least part of the gas from the fluid-bed cooler(s) is used as fluidization gas for the bed of seed particles.

7. Process according to any one of claims 1—6, characterized in that the ammoniumnitrate-containing liquid includes one or more fillers, trace elements, agrochemicals, thermal stabilizers and/or fertilizer salts.

**Patentansprüche**

1. Verfahren zur Herstellung von Ammoniumnitrat enthaltenden Granulatkörnern mit hoher Schüttdichte auf der Basis einer Kalziumnitrat und Ammoniumnitrat enthaltenden flüssigen Zusammensetzung, dadurch gekennzeichnet, daß eine Ammoniumnitrat enthaltende flüssige Zusammensetzung mit einem Gehalt von höchstens 5 Gew.-% Wasser und 0,3—3,5 Gew.-% Kalziumnitrat, berechnet in bezug auf die Menge an Ammoniumnitrat, und mit einer Temperatur von wenigstens 5°C oberhalb ihrem Kristallisationspunkt in ein Wirbelbett von Ammoniumnitrat enthaltenden Keimteilchen mit einer Temperatur zwischen 95 und 135°C mit Hilfe eines Luftstromes mit einer Temperatur von etwa gleich oder gering niedriger als die der flüssigen Zusammensetzung und in einer solchen Menge, daß das Masseverhältnis von Luft zu flüssiger Zusammensetzung 1:1 bis 1:4 beträgt, versprüht wird und die gebildeten Granulatkörner aus dem Bett abgezogen werden.

2. Verfahren nach Anspruch 1, dadurch gekennzeichnet, daß eine Ammoniumnitrat enthaltende Schmelze mit einem Gehalt von höchstens 1 Gew.-% Wasser in ein Bett von Keimteilchen mit einer Temperatur zwischen 100 und 110° versprüht wird.

3. Verfahren nach Anspruch 1 oder 2, dadurch gekennzeichnet, daß eine Ammoniumnitrat enthaltende flüssige Zusammensetzung enthaltend 0,5—1,0 Gew.-% Kalziumnitrat, berechnet in bezug auf die Menge an Ammoniumnitrat, eingesetzt wird.

4. Verfahren nach einem der Ansprüche 1—3, dadurch gekennzeichnet, daß als Wirbelgas Luft eingesetzt wird, die durch das Bett vom Boden bis zum oberen Ende mit einer Oberflächengeschwindigkeit, die etwa das Zweifache der Mindestfluidisierungsgeschwindigkeit beträgt, durchgeblasen wird.

5. Verfahren nach einem der Ansprüche 1—4, dadurch gekennzeichnet, daß die aus dem Bett abgezogenen Granulatkörner sofort oder nach dem Sieben mittels eines oder mehrerer Wirbelbettkühler rasch abgekühlt werden.

6. Verfahren nach Anspruch 5, dadurch gekennzeichnet, daß wenigstens ein Teil des Gases aus dem (den) Wirbelbettkühler(n) als Wirbelgas für das Wirbelbett der Keimteilchen verwendet wird.

7. Verfahren nach einem der Ansprüche 1—6, dadurch gekennzeichnet, daß die Ammoniumnitrat enthaltende Flüssigkeit einen oder mehrere Füllstoffe, Spurenelemente, Agrarchemikalien, Wärmestabilisatoren und/oder Düngersalzen enthält.

**Revendications**

1. Procédé de préparation de granules contenant du nitrate d'ammonium de haute densité en vrac, à base d'une composition liquide contenant du nitrate de calcium et du nitrate d'ammonium, ledit procédé étant caractérisé en ce qu'on pulvérise une composition liquide contenant du nitrate d'ammonium, renfermant au maximum 5% pds d'eau et 0,3 à 3,5% pds de nitrate de calcium, calculés par rapport à la quantité du nitrate d'ammonium, et ayant une température d'au moins 5°C au-dessus de sont point de cristallisation, dans un lit fluidisé de nitrate d'ammonium contenant des particules d'ensemencement à une température de 95 à 135°C, à l'aide d'un courant d'air dont la température est à peu près égale ou légèrement inférieure à celle de la composition liquide, à un taux tel que le rapport massique de l'air à la composition liquide est 1:1 à 1:4, et les granules formés sont déchargés du lit.

2. Procédé selon la revendication 1, caractérisé en ce qu'on pulvérise une masse fondue contenant du nitrate d'ammonium renfermant au maximum 1% pds d'eay sur un lit de particules d'ensemencement qui sont à une température de 100 à 110°C.

3. Procédé selon la revendication 1 ou 2, caractérisé en ce qu'on utilise une composition liquide contenant du nitrate d'ammonium qui renferme 0,5 à 1,0% pds de nitrate de calcium calculé par rapport à la quantité de nitrate d'ammonium.

4. Procédé selon l'une quelconque des revendications 1 à 3, caractérisé en ce que le gaz de fluidisation utilisé est l'air s'écoulant à travers le lit de base en haut à une vitesse superficielle environ double de la vitesse minimale de fluidisation.

5. Procédé selon l'une quelconque des revendications 1 à 4, caractérisé en ce qu'on refroidit rapidement immédiatement les granules déchargés du lit ou bien après tamisage, à l'aide d'un ou plusieurs refroidisseurs à lit fluidisé.

6. Procédé selon la revendication 5, caractérisé en ce qu'au moins une partie du gaz provenant du ou des refroidisseurs à lit fluidisé sert comme gaz de fluidisation pour le lit de particules d'ensemencement.

7. Procédé selon l'une quelconque des revendications 1 à 6, caractérisé en ce que le liquide contenant du nitrate d'ammonium contient une ou plusieurs charges, des éléments en forme de traces, des produits agrochimiques, des stabilisants thermiques et/ou des sels d'engrais.